# EUROPEAN PATENT APPLICATION

(11) **EP 2 783 904 A2**
(43) Date of publication of application: **01.10.2014**
(21) Application number: 14158344.3
(22) Date of filing: 07.03.2014
(51) Int. Cl.: B60L 11/18, B60L 3/00

(54) **Vehicle system**

(30) Priority: 25.03.2013 JP 2013061590
(71) Applicant: TOYOTA JIDOSHA KABUSHIKI KAISHA, Toyota-shi, Aichi-ken, 471-8571 (JP)
(72) Inventor: Suzuki, Tomonori, Toyota-shi, Aichi-ken, 471-8571 (JP); Nakazawa, Atsushi, Toyota-shi, Aichi-ken, 471-8571 (JP)
(74) Representative: Kuhnen & Wacker

(57) **Abstract**

A vehicle system (10) having a plurality of power supplies includes: a plurality of first loads (3) that use only a first power supply (S1) from among the plurality of power supplies (S1, S2); a second load (4) that uses the first power supply (S1), from among the plurality of power supplies (S1, S2), as a normal power supply, and uses a second power supply (S2) as an alternate power supply to the first power supply (S1); and a monitoring apparatus (1) that monitors respective conditions of the first loads (3) by communicating with the first loads (3), and determines that the first power supply (S1) has been removed after detecting that communication with all of the plurality of first loads (3) has been interrupted.

## Description

### BACKGROUND OF THE INVENTION

### 1. Field of the Invention

The invention relates to a vehicle system, and more particularly to a system having a plurality of switchable power supplies.

### 2. Description of Related Art

Development of a vehicle system that includes two in-vehicle batteries and uses the two batteries alternately is advancing. In this type of vehicle system, a main battery and a sub-battery are installed and the main battery is used as a normal power supply. When the main battery cannot function sufficiently, the sub-battery supplies power to an electronic control unit (ECU), a sensor circuit, and so on required to continue or start an operation. Hence, when the main battery is damaged, for example, power supply from the main battery is switched to power supply from the sub-battery, and as a result, a power supply for driving a motor that unlocks a door is secured.

With regard to a load that consumes a comparatively large amount of power, such as a power load of a motor or the like, a control ECU provided in the vehicle system switches the power supply from the main battery to the sub-battery by switch-controlling a relay upon reception of a collision detection signal from a collision sensor. In this case, the sub-battery functions as an alternate power supply that permits a non-power supply time during a switch from the main battery. Further, power is supplied to the control ECU itself on a power supply path to which the main battery and the sub-battery are connected via respective diodes. Hence, under normal conditions power is supplied to the control ECU from the main battery via the diode, but when a voltage of the main battery decreases, the diode connected to an output of the sub-battery is naturally energized by a voltage reduction on the power supply path such that the power supply is switched to the sub-battery. In this case, the sub-battery functions as a backup power supply that prevents a voltage reduction from occurring during a switch from the main battery.

Hence, when the functions of the main battery cannot be secured in a vehicle system including two power supplies, functions of various loads are maintained by switching to power supply from the sub-battery. Under normal conditions, the sub-battery is charged by a power generator system such that a voltage thereof is maintained in preparation for emergency output.

According to the vehicle system described above, when the main battery is removed from the vehicle system for the purpose of battery replacement or maintenance following damage, for example, backup is performed by switching the power supplied to the control ECU from the main battery to the sub-battery. In this system, however, a normal level voltage is supplied continuously to the control ECU from the sub-battery, and it may therefore be impossible for a voltage monitor that monitors an input voltage on the control ECU side to detect removal of the main battery from a voltage value. Hence, in the control ECU, and therefore the vehicle system, removal of the main battery cannot be detected unless a configuration for detecting an output of the main battery directly or the like is added, and as a result, appropriate control corresponding to a vehicle condition cannot be performed.

For example, an ECU installed in the vehicle may receive a power supply only from the main battery. When the main battery is removed, therefore, the power supply to this ECU is cut off such that the ECU stops operating, and as a result, the control ECU that monitors the ECU via vehicle communication may erroneously determine that an abnormality has occurred in the communication partner ECU or the like.

Accordingly, the control ECU, having determined erroneously that an abnormality has occurred in the communication partner ECU even though the vehicle is in a normal condition whereby the main battery has simply been removed such that power is supplied to a predetermined device from the sub-battery, performs an operation in a failure mode. Further, when the main battery is removed, a warning function such as sounding an alarm to indicate removal cannot be operated.

Japanese Patent Application Publication No. 11-008948 (JP 11-008948 A) discloses a configuration in which power is supplied by a backup capacitor following removal of a battery. In this configuration, removal of the battery is detected by detecting a voltage of the backup capacitor, which decreases gradually following removal of the battery. When a capacity of the backup capacitor is large, however, the voltage reduction is small, making it difficult to detect removal of the battery. Accordingly, a high-precision measuring instrument or the like is required, and therefore this configuration cannot be employed easily in a general-purpose system. JP 11-008948 A also discloses a configuration in which a mechanical switch that operates in response to removal of the battery is provided. When this method is employed, however, a dedicated switch must be added, leading to increases in the complexity and cost of the configuration.

### SUMMARY OF THE INVENTION

The invention provides a vehicle system which includes an alternate power supply to a main battery, and with which removal of the main battery can be detected easily.

A first aspect of the invention is a vehicle system including: a plurality of power supplies; a plurality of first loads that use only a first power supply from among the plurality of power supplies; a second load that uses the first power supply, from among the plurality of power supplies, as a normal power supply, and uses a second power supply as an alternate power supply to the first power supply; and a monitoring apparatus that monitors respective conditions of the first loads by communicating with the first loads, and determines that the first power supply has been removed after detecting that communication with all of the plurality of first loads has been interrupted.

According to the first aspect, the monitoring apparatus communicates with the respective first loads that use only the first power supply of the plurality of power supplies, and determines that the first power supply has been removed when communication with all of the first loads is interrupted. When it is determined that the first power supply has been removed, use of the second power supply as an alternate power supply by the second load can be controlled appropriately. Hence, a vehicle system with which removal of the first power supply can be detected easily using existing device facilities can be provided.

According to the first aspect, wherein the monitoring apparatus may use at least the first power supply, from among the first power supply and the second power supply, as a normal power supply, and may use the second power supply as a backup power supply to the first power supply.

According to the above aspect, the monitoring apparatus can detect removal of the first power supply easily even when configured to be incapable of detecting backup of the first power supply by the second power supply directly.

According to the first aspect, further may include: a switch apparatus that switches a power supply to the second load between a power supply from the first power supply and a power supply from the second power supply; and a switch control apparatus that controls a switch operation of the switch apparatus.

According to the above aspect, the mechanism with which the switch control apparatus controls the switch operation performed on the switch apparatus in relation to the second load can be used not only when a failure occurs while an ignition is ON and a vehicle power supply is ON, but also when the first power supply is removed while the vehicle power supply is OFF, for example during vehicle maintenance. As a result, a system configuration need not be increased in complexity.

According to the first aspect, further may include a drive control apparatus that controls driving of the second load.

According to the above aspect, the second load that uses the second power supply can be drive-controlled by the drive control apparatus even when the first power supply has been removed, and therefore a component that is to be operated when the vehicle power supply is OFF can be operated appropriately.

A second aspect of the invention is a vehicle system including: a plurality of power supplies including two power supplies, an output voltage waveform of a second power supply of the two power supplies having a ripple waveform obtained by superimposing at least a ripple component onto an output voltage waveform of a first power supply of the two power supplies; a load that uses the first power supply as a normal power supply and uses the second power supply as an alternate power supply to the first power supply; and a detection apparatus that uses the first power supply as a normal power supply, uses the second power supply as a backup power supply to the first power supply, detects a supplied power supply voltage, and determines that the first power supply has been removed after detecting a power supply voltage having the ripple waveform.

According to the second aspect, the detection apparatus determines that the first power supply has been removed by detecting the ripple waveform of the second power supply that supplies power to the detection apparatus only when the first power supply has been removed. When it is determined that the first power supply has been removed, use of the second power supply as an alternate power supply by the load can be controlled appropriately. Hence, a vehicle system with which removal of the first power supply can be detected easily using existing device facilities can be provided.

According to the second aspect, further may include: another load that uses only the first power supply, from among the plurality of power supplies; and a monitoring apparatus that monitors a condition of the other load by communicating with the other load.

According to the above aspect, the detection apparatus detects removal of the first power supply even in a condition where the other load, which uses only the first power supply, cannot communicate with the monitoring apparatus due to removal of the first power supply, and therefore the monitoring apparatus can be prevented from performing inappropriate processing based on an erroneous determination.

According to the second aspect, further may include: a switch apparatus that switches a power supply to the load between a power supply from the first power supply and a power supply from the second power supply; and a switch control apparatus that controls a switch operation of the switch apparatus.

According to the above aspect, the mechanism with which the switch control apparatus controls the switch operation performed on the switch apparatus in relation to the load can be used not only when a failure occurs while the ignition is ON and the vehicle power supply is ON, but also when the first power supply is removed while the vehicle power supply is OFF, for example during vehicle maintenance. As a result, the system configuration need not be increased in complexity.

According to second aspect, further may include a drive control apparatus that controls driving of the load.

According to the above aspect, the load, which uses the second power supply, can be drive-controlled by the drive control apparatus even when the first power supply has been removed, and therefore a component that is to be operated when the vehicle power supply is OFF can be operated appropriately.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a block diagram showing a configuration of a vehicle system according to an embodiment of the invention;
FIG. 2 is a timing chart illustrating communication conditions of respective ECUs in a first vehicle system according to an embodiment of the invention;
FIG. 3 is a flowchart illustrating processing executed by the first vehicle system to detect removal of a main battery, according to an embodiment of the invention;
FIG. 4 is a circuit diagram showing a configuration of a sub-battery provided in a second vehicle system according to an embodiment of the invention;
FIG. 5 is a waveform diagram illustrating a waveform of a power supply voltage supplied to a control ECU in the second vehicle system, according to an embodiment of the invention; and
FIG. 6 is a flowchart illustrating processing executed by the second vehicle system to detect removal of the main battery, according to this embodiment of the invention.

### DETAILED DESCRIPTION OF EMBODIMENTS

### [First Embodiment]

An embodiment of the invention will be described below using the drawings.

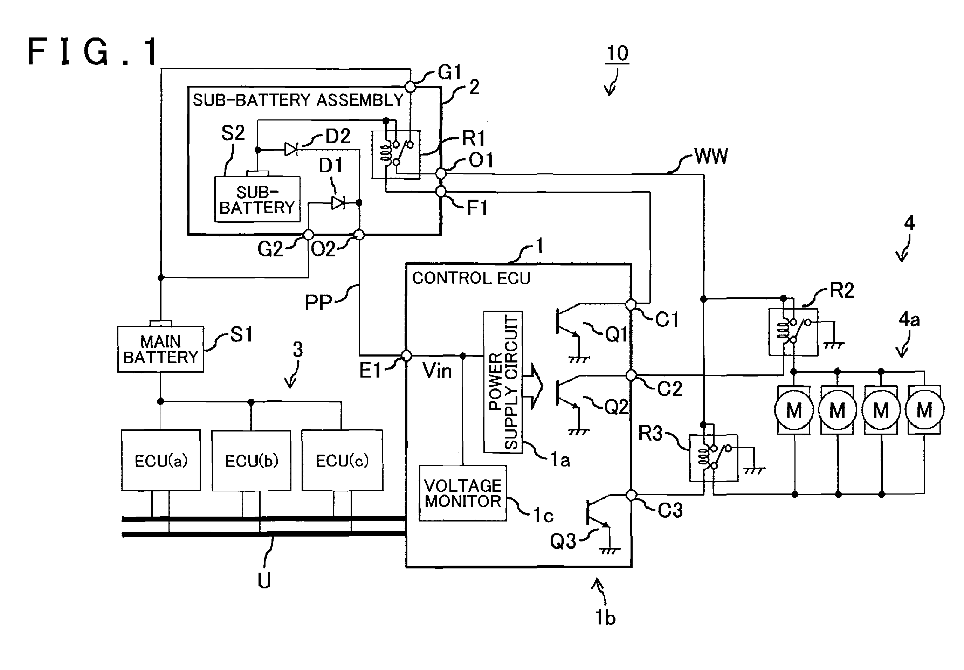

FIG. 1 shows a configuration of a vehicle system 10 according to this embodiment. The vehicle system 10 includes a main battery S1, a control ECU 1, a sub-battery assembly 2, an ECU group 3, a load 4, and a communication bus U.

The main battery (a first power supply) S1 includes a chargeable and detachable battery such as a nickel hydrogen battery, a nickel cadmium battery, a lithium ion battery, an electric double layer capacitor, or a lead storage battery, and a power conversion apparatus such as a direct current-direct current (DC-DC) converter combined appropriately therewith as required. The main battery S1 is charged from a power generator while an ignition is ON.

The control ECU 1 is an ECU used to continue an operation when power cannot be supplied from the main battery S1, and is constituted by a door lock/alarm control ECU, for example. When a vehicle is in a normal condition, the control ECU 1 uses the main battery S1 as a power supply such that power is supplied thereto from the main battery S1 via the sub-battery assembly 2 and then through a power supply terminal E1. In a case where the control ECU 1 is also used to perform operations for security reasons or the like while a vehicle power supply is OFF, the power supply input into the power supply terminal E1 is set as a continuous power supply. When the power supply from the main battery S1 to the control ECU 1 is cut off or a power supply voltage decreases, the sub-battery S2, to be described below, is used as a backup power supply to the main battery S 1.

The control ECU 1 is basically constituted by a computer having a processor and a memory, and also includes a power supply circuit 1 a, a load control circuit 1b, and a voltage monitor 1c. The power supply circuit 1a converts a power supply voltage input from the power supply terminal E1 into a voltage and a current having a predetermined level and a predetermined waveform in order to supply an operation voltage to the load control circuit 1b. The load control circuit 1b controls driving of a load applied to the control ECU 1. A configuration of the load control circuit 1b is not shown in detail in the example of FIG. 1, but a configuration for outputting an excitation current of a relay R1, to be described below, from an output stage Q1 via a control output terminal C1, a configuration for outputting an excitation current of a relay R2, to be described below, from an output stage Q2 via a control output terminal C2, and a configuration for outputting an excitation current of a relay R3, to be described below, from an output stage Q3 via a control output terminal C3 are shown.

The voltage monitor 1c detects a voltage Vin input into the power supply terminal E1. The control ECU 1 determines whether or not a power supply condition is normal from a value of the voltage Vin detected by the voltage monitor 1c.

Further, the control ECU (a monitoring apparatus) 1 communicates with another ECU via the communication bus U, which is constituted by a controller area network (CAN) or the like, and in particular communicates periodically with the ECU group 3 to monitor conditions of the respective ECUs.

The sub-battery assembly 2 is a module having components including a sub-battery S2, a relay R1, a diode D1, and a diode D2. With this configuration, the sub-battery assembly 2 switches power supply from the main battery S1 to the load 4 to power supply from the sub-battery S2 to the load 4.

The sub-battery S2 includes a capacitor or a secondary battery, and a power conversion apparatus combined therewith as required. Although not shown in the drawing, under normal conditions the sub-battery S2 is charged from a power generator system. The relay (a switch apparatus) R1 switches between relaying a power supply output from the main battery S1, which is input into a battery connection terminal G1, and a power supply output from the sub-battery S2 to the load 4. An excitation coil of the relay R1 is connected between the power supply output of the sub-battery S2 and a control input terminal F1. The control input terminal F1 is connected to the control output terminal C1 of the control ECU 1 such that when the control ECU 1 energizes the output stage Q1, a current flows to the excitation coil. In this case, the control ECU 1 functions as a switch control apparatus that controls a switch operation of the relay R1. An output terminal of the relay R1 leading to the load is connected to a power supply path WW that extends to the load 4 via a power supply output terminal O1.

The diode D1 is a rectifying element that connects the power supply output from the main battery S1 to a power supply path PP that extends to the power supply terminal E1 of the control ECU 1. An anode of the diode D1 is connected to a battery connection terminal G2, and a cathode of the diode D1 is connected to a power supply output terminal 02. The diode D2 is a rectifying element that connects the power supply output from the sub-battery S2 to the power supply path PP. An anode of the diode D2 is connected to an output terminal of the sub-battery S2, and a cathode of the diode D2 is connected to the power supply output terminal 02. The power supply path PP extends from the respective cathodes of the diode D1 and the diode D2 to the power supply terminal E1 of the control ECU 1.

By making an output voltage of the sub-battery S2 lower than an output voltage of the main battery S1 within an allowable input range of the power supply circuit 1a, for example, the power supply path PP is held substantially at the output voltage of the main battery S1 via the diode D1 as long as the power supply output of the main battery S1 is normal. At this time, an opposite direction voltage is applied to the diode D2 such that the diode D2 is switched OFF. When an output reduction occurs in the main battery S1, the voltage of the power supply path PP decreases, and therefore a forward direction voltage is applied to the diode D2 such that the diode D2 is switched ON. Accordingly, the power supply output from the sub-battery S2 is supplied to the power supply path PP. With this configuration, the sub-battery S2 is disconnected from the load and trickle-charged under normal conditions, and performs a backup operation to supply power to the control ECU 1 only when a failure occurs in the main battery S 1.

Further, by making the output voltage of the sub-battery S2 equal to the output voltage of the main battery S1, for example, power can be supplied to the power supply path PP from both the main battery S1 and the sub-battery S2 via the diode D1 and the diode D2 as long as the power supply output of the main battery S 1 is normal. When an output reduction occurs in the main battery S1, an anode side voltage of the diode D1 decreases, and therefore an opposite direction voltage is applied to the diode D1 such that the diode D1 is switched OFF. Accordingly, only the power supply output from the sub-battery S2 is supplied to the power supply path PP. With this configuration, the sub-battery S2 is float-charged under normal conditions so as to supply power to the main battery S1 even when the main battery S 1 is normal, and during a failure, the sub-battery S2 performs the backup operation to supply power to the control ECU 1 singly.

The ECU group 3 is constituted by a plurality of ECUs (first loads) that use only the main battery S1 as a power supply. FIG. 1 shows an example in which the ECU group 3 is constituted by three ECUs, namely an ECU (a), an ECU (b), and an ECU (c). The respective ECUs of the ECU group 3 communicate with the control ECU 1 periodically via the communication bus U at predetermined intervals of several seconds. Through this periodic communication, the control ECU 1 learns conditions such as whether or not the respective ECUs of the ECU group 3 are operating normally and whether or not provided sensor signals are present.

The load (a second load) 4 is used when power supply from the main battery S1 is switched to power supply from the sub-battery S2. In this case, the load 4 uses the main battery S1 as a normal power supply, and uses the sub-battery S2 as an alternate power supply to the main battery S1. In the example of FIG. 1, the load 4 is shown as a door locking mechanism including a door locking/unlocking motor 4a, the relay R2, and the relay R3. The relay R2 and the relay R3 perform a contact point connection operation to switch the door locking/unlocking motor 4a between normal rotation driving and reverse rotation driving. When the door locking/unlocking motor 4a is to be stopped, the relay R2 and the relay R3 switch a contact point such that the door locking/unlocking motor 4a is set in a no-voltage condition. A door locking output current is supplied to the excitation coil of the relay R2 from the output stage Q2 of the control ECU 1 via the control output terminal C2, and a door unlocking output current is supplied to the excitation coil of the relay R3 from the output stage Q3 of the control ECU 1 via the control output terminal C3. In this case, the control ECU 1 functions as a drive control apparatus that controls driving of the load 4.

When the control ECU 1 receives a collision detection signal from a collision sensor, not shown in the drawing, the main battery S1 may fail, and therefore the door locking mechanism, which is locked by the relay R2 during vehicle travel, is unlocked by the relay R3. When the main battery S1 fails at this time, an operation power supply of the door locking/unlocking motor 4a is lost, and therefore the control ECU 1, having obtained a power supply from the sub-battery S2, switches the method of supplying power to the door locking/unlocking motor 4a from power supply from the main battery S1 to power supply from the sub-battery S2 by operating the relay R1. Further, the control ECU 1 operates the relay R2 and the relay R3. Hence, the load 4 is a load that requires a larger amount of power than the weak power supply of the control ECU 1, for example, and a load that is drive-controlled by the control ECU 1.

The door locking mechanism also requires a continuous supply of power when performing an operation in conjunction with a security mechanism that keeps the door locked when the vehicle power supply is OFF, for example. When the main battery S 1 is removed in this case, the door locking mechanism cannot perform this operation, and therefore the control ECU 1 performs control to switch the power supply to the load 4 to power supply from the sub-battery S2. By detecting removal of the main battery S1 in a manner to be described below, the control ECU 1 can perform appropriate load driving control corresponding to the vehicle condition established upon removal of the main battery S1 without erroneously detecting a separate failure.

Next, control processing performed by the control ECU 1 on the basis of the periodic communication between the control ECU 1 and the ECU group 3 in the vehicle system 10 having the above configuration will be described.

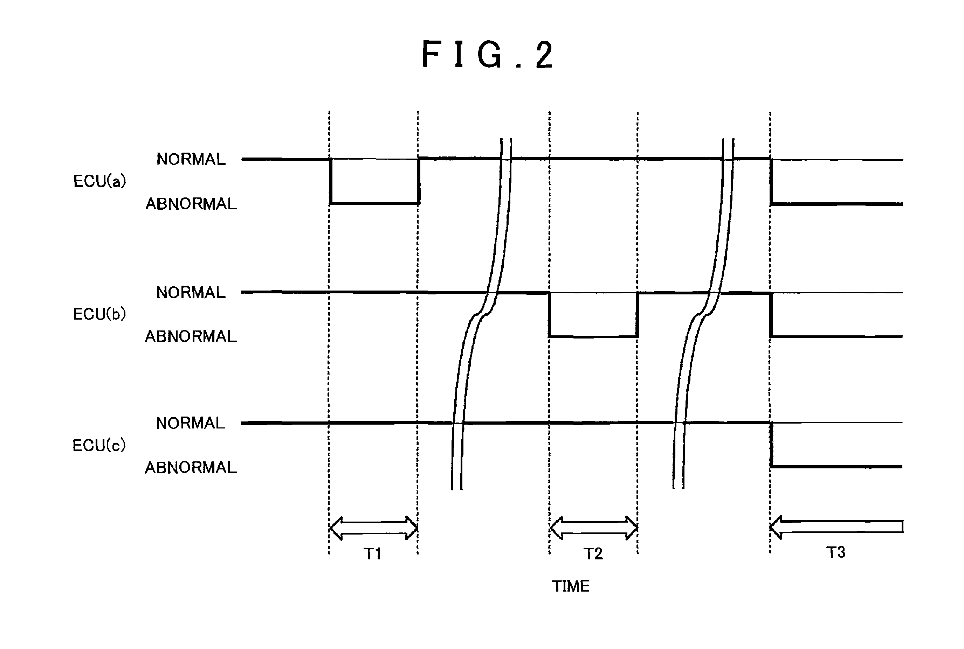

FIG. 2 shows the manner in which the respective ECUs of the ECU group 3 notify the control ECU 1 of their own conditions, wherein an abscissa shows time. When the respective ECUs are in a normal condition, communication with the control ECU 1 is possible, and therefore the ECUs transmit a condition signal to the control ECU 1 via the communication bus U at intervals of several seconds. When, for example, a unique abnormal condition such as a failure occurs in the ECU (a) within a period T1 such that the ECU (a), which had been transmitting the condition signal to the control ECU 1 up to that point, can no longer transmit the condition signal to the control ECU 1, communication is interrupted. The control ECU 1 determines that communication has been interrupted by waiting for the elapse of a determination time set to sufficiently exceed a standard wait time of ten seconds, for example, following confirmation by the control ECU 1 of the conditions of the respective ECUs, checking whether or not a subsequent condition signal has been transmitted, and when the condition signal is not received within the determination time, determining that communication with the corresponding ECU has been interrupted. The ECU (a) returns to a normal condition following the period T1 and therefore transmits the condition signal to the control ECU 1 again. Likewise with regard to the ECU (b), when a unique abnormal condition occurs in the ECU (b) during a period T2 such that the ECU (b) can no longer transmit the condition signal to the control ECU 1, communication is interrupted. Before and after the period T2, on the other hand, the ECU (b) transmits the condition signal to the control ECU 1.

When the main battery S 1 is removed from the vehicle system 10, on the other hand, as shown in a period T3, all of the ECUs of the ECU group 3 become inoperable so as to no longer be able to transmit the condition signal to the control ECU 1, and as a result, communication between the ECUs and the control ECU 1 is interrupted. Communication with all of the ECUs of the ECU group 3 may be interrupted when a unique abnormal condition occurs in all of the ECUs, but the probability thereof is low. Hence, when the control ECU 1 detects a communication interruption condition in which the condition signal is not transmitted from any of the ECUs even after the elapse of the determination time, the aforesaid probability may be considered as substantially zero, and accordingly, the control ECU 1 determines that the main battery S 1 has been removed from the vehicle system 10.

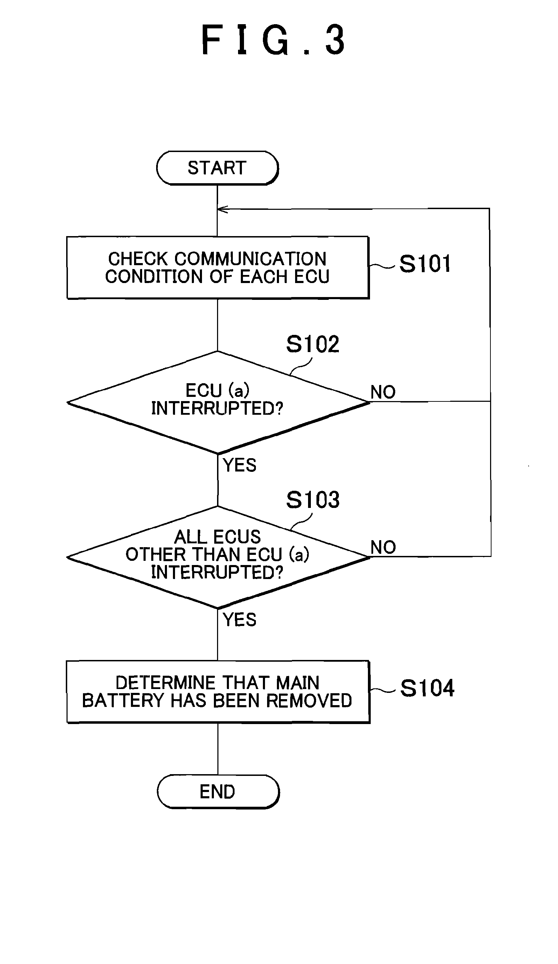

FIG. 3 is a flowchart showing an example of processing executed by the control ECU 1 to determine removal of the main battery S1. This processing may be realized by having the processor of the control ECU 1 execute a program stored in the memory of the control ECU 1 or a memory provided on the exterior of the control ECU 1. Note that other processing executed by the control ECU 1, such as that described above, is likewise realized by executing a program.

The control ECU 1 performs periodic communication with the respective ECUs of the ECU group 3, and in step S101, the control ECU 1 checks the communication conditions of the respective ECUs using a processing result included in the periodic communication processing, i.e. confirmation of whether or not the condition signal has been transmitted from each ECU. To check the communication condition each time, the control ECU 1 first focuses on the communication condition of a specific ECU. In step S102, for example, first, a determination is made as to whether or not communication with the ECU (a) has been interrupted. When communication with the ECU (a) is interrupted in step S102, the processing advances to step S103, and when communication with the ECU (a) is not interrupted, the processing returns to step S101.

In step S103, the control ECU 1 determines whether or not communication with the ECUs other than the ECU (a), i.e. the ECU (b) and the ECU (c), is interrupted. When communication with the ECU (b) and the ECU (c) is interrupted in step S103, the processing advances to step S104, and when communication with at least one of the ECU (b) and the ECU (c) is not interrupted, the processing returns to step S101.

In step S104, since communication with all of the ECUs of the ECU group 3 has been interrupted, the control ECU 1 determines that the main battery S1 has been removed from the vehicle system 10. Following step S104, the processing for determining removal of the main battery S1 is terminated.

With the vehicle system 10 according to this embodiment, as described above, the control ECU 1 communicates with the respective ECUs of the ECU group 3 serving as the first load that uses only the main battery S1 from among the plurality of power supplies provided in the vehicle system 10, and when communication with all of the ECUs is interrupted, the control ECU 1 determines that the main battery S1 has been removed. Having determined that the main battery S1 has been removed, the control ECU 1 can then appropriately control use of the sub-battery S2 as an alternate power supply by the load 4. Hence, a vehicle system with which removal of the main battery can be detected easily using existing device facilities can be provided. Accordingly, the control ECU 1, and therefore the vehicle system 10, can be prevented from performing inappropriate processing based on an erroneous determination in response to internal variation in the vehicle system 10 caused by removal of the main battery S1, and moreover, a warning indicating that the main battery S1 has been removed can be issued via a display apparatus, an audio output apparatus, or the like.

Further, with the vehicle system 10 according to this embodiment, the control ECU 1 can detect removal of the main battery S1 easily even when configured to be incapable of detecting backup of the main battery S1 by the sub-battery S2 directly.

Furthermore, with the vehicle system 10 according to this embodiment, the mechanism with which the control ECU 1 controls the switch operation performed on the relay R1 in relation to the load 4 can be used not only when a failure occurs while the ignition is ON and the vehicle power supply is ON, but also when the main battery S 1 is removed while the vehicle power supply is OFF, for example during vehicle maintenance. As a result, the system configuration need not be increased in complexity.

Moreover, with the vehicle system 10 according to this embodiment, the load 4 that uses the sub-battery S2 can be drive-controlled by the control ECU 1 even when the main battery S1 has been removed, and therefore a component that is to be operated when the vehicle power supply is OFF can be operated appropriately.

Note that the power supplies (batteries) of the vehicle system 10 are typically provided in plurality including the main battery S1 and the sub-battery S2. Further, the control ECU 1 may use only the sub-battery S2 as a power supply at all times. Any ECU or the like that is operated when the vehicle power supply is OFF, such as an airbag ECU or an ECU that performs emergency communication with a service station when an airbag is operated, for example, may be applied as the control ECU 1 instead of the door lock/alarm ECU described above.

### [Second Embodiment]

Another embodiment of the invention will be described below using the drawings.

In a vehicle system according to this embodiment, the sub-battery S2 of the vehicle system 10 shown in FIG. 1 has a hardware configuration for outputting a ripple waveform in particular.

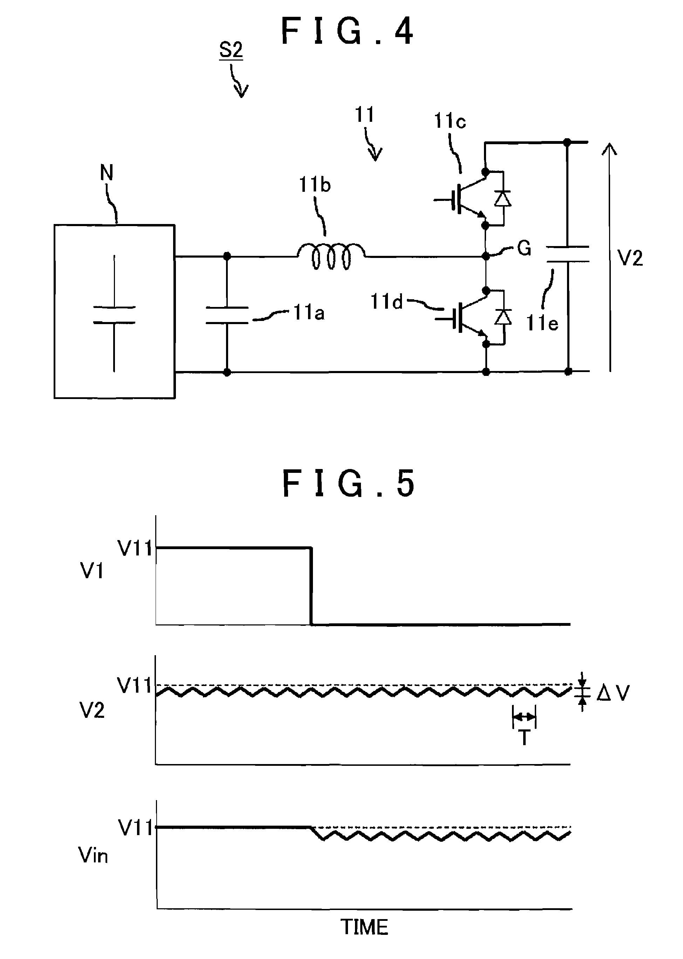

As shown in FIG. 4, the sub-battery S2 includes a battery main body N and a step-up converter 11 serving as a power conversion apparatus.

The battery main body N is constituted by a capacitor or a similar battery to the main battery S1. The step-up converter 11 includes an input capacitor 11a, a reactor 11b, a switching element 11c, a switching element 11d, and a smoothing capacitor 11e. When input smoothing is not required, such as when the battery main body N is constituted by a capacitor, use of the input capacitor 11a may be omitted. The switching element 11c and the switching element 11d respectively include reflux diodes, and as shown in FIG. 4, for example, are constituted by insulated gate bipolar transistors (IGBTs) having inbuilt diodes.

The switching element 11c and the switching element 11d are connected in series by a connection point G. In FIG. 4, an emitter of an IGBT part of the switching element 11c and a collector of an IGBT part of the switching element 11d are connected to each other. An anode of the reflux diode of the switching element 11c is connected to the connection point G, and a cathode is connected to a high potential output side terminal. An anode of the reflux diode of the switching element 11d is connected to a low potential output side terminal, and a cathode is connected to the connection point G. One end of the reactor 11b is connected to the connection point G One end of the input capacitor 11a is connected to another end of the reactor 11b, and the input capacitor 11a is connected in parallel to an output of the battery main body N. The smoothing capacitor 11e is connected between the high potential output side terminal (the collector) of the switching element 11c and the low potential output side terminal (the emitter) of the switching element 11d such that an inter-terminal voltage of the smoothing capacitor 11e serves as an output voltage V2 of the sub-battery S2.

During a step-up process, a control switch portion (the IGBT) of the switching element 11d is driven ON and OFF. The output voltage of the battery main body N is smoothed by the input capacitor 11a, and when the control switch portion of the switching element 11d is switched ON, a current increases along a gradient determined by an inductance of the reactor 11b, whereby magnetic energy corresponding to a current obtained when the control switch portion of the switching element 11d is switched OFF accumulates in the reactor 11b. After the control switch portion of the switching element 11d is switched OFF, the magnetic energy is discharged from the reactor 11b such that a current flows to the smoothing capacitor 11e side through the reflux diode of the switching element 11c. A control switch portion (the IGBT) of the switching element 11c remains OFF. By switching the control switch portion of the switching element 11d ON and OFF repeatedly in a similar manner thereafter, the desired output voltage V2 is obtained.

By modifying settings of the inductance of the reactor 11b, a switching frequency and an ON period duty ratio of the control switch portion of the switching element 11d, and a capacity value of the smoothing capacitor 11e at this time, the value of the output voltage V2, or in other words a step-up ratio, can be varied, and by setting these conditions of the value so that the output voltage V2 is insufficiently smoothed, an output voltage V2 on which a periodically varying ripple is superimposed can be obtained.

As shown in FIG. 5, assuming that an output voltage V1 of the main battery S1 has a voltage value V11, the output voltage V2 of the sub-battery S2 is generated to have a ripple waveform in a lower range than the voltage value V11. When the output voltage V2 has a lower voltage value than the voltage value V11, this corresponds to a condition in which the sub-battery S2 is trickle-charged, as described above. As shown in FIG. 5, under normal conditions, power is supplied to the control ECU 1 only from the main battery S1, and when the main battery S 1 is removed, the voltage of the power supply path PP decreases such that backup is performed to supply power to the control ECU 1 from the sub-battery S2.

The voltage monitor 1c of the control ECU 1 detects the voltage Vin supplied to the power supply terminal E1 by sampling. An equivalent method to an analog-digital (AD) conversion method, such as a successive approximation method, for example, may be used to detect the voltage Vin. The control ECU 1 determines the waveform of the voltage Vin by analyzing variation in time series data of the detected voltage Vin. The waveform of the output voltage V2 has a ripple waveform, in which a directly current component and a ripple are superimposed on the output voltage V1 having a direct current waveform. As shown by the waveform of the output voltage V2 in FIG. 5, a period T of the ripple waveform is set such that analysis by the voltage monitor 1c on a temporal axis is possible, and an amplitude ΔV of the ripple is set such that the voltage monitor 1c can analyze voltage variation. Here, for example, the amplitude ΔV of the ripple is limited such that the voltage Vin remains within an allowable variation range of the input of the power supply circuit 1a provided in the control ECU 1. When the power supply circuit 1a generates a stabilized voltage of 5 V, for example, the amplitude ΔV of the ripple may be set to be limited to a range of ± 0.5 to 1 V from a central voltage value of the ripple.

In the example of FIG. 5, the output voltage V2 is set to be lower than the voltage value V11 of the output voltage V1 so that the output voltage V2 of the sub-battery S2 is supplied to the control ECU 1 only when the main battery S 1 is removed. The control ECU 1 determines that the main battery S 1 has been removed from the vehicle system 10 after detecting that the input voltage Vin has the set ripple waveform. In this case, the control ECU 1 functions as a detection apparatus that detects a supplied power supply voltage. In a case where a certain degree of variation is envisaged in the detected ripple waveform, an allowable waveform variation range may be set as a condition for detecting the ripple waveform.

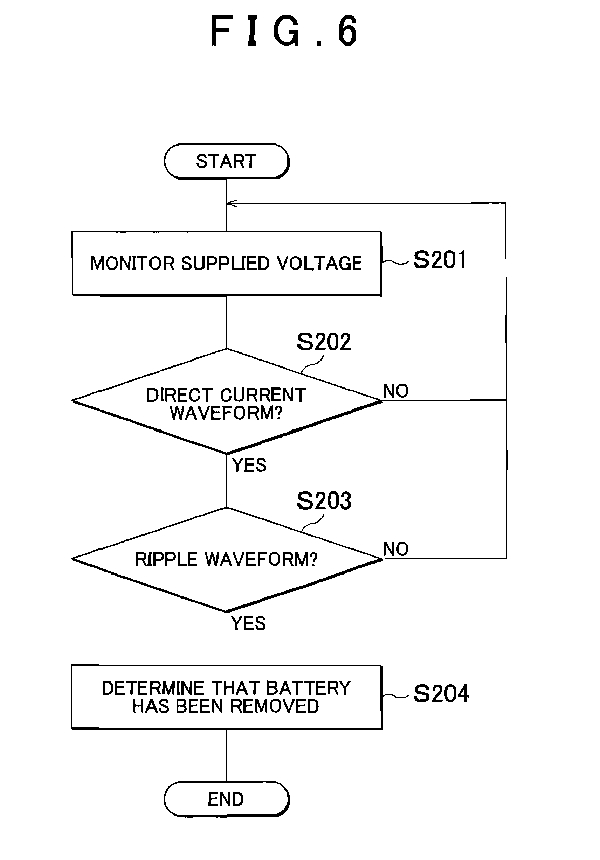

FIG. 6 is a flowchart showing an example of processing executed by the control ECU 1 to determine removal of the main battery S1. This processing may be realized by having the processor of the control ECU 1 execute a program stored in the memory of the control ECU 1 or a memory provided on the exterior of the control ECU 1.

In step S201, the voltage monitor 1c of the control ECU 1 analyzes the waveform of the voltage Vin input into the power supply terminal E1 by detecting the voltage Vin through sampling at predetermined period intervals. Next, in step S202, the control ECU 1 determines whether or not the waveform of the detected voltage Vin is a direct current waveform. When it is determined that the waveform of the voltage Vin is a direct current waveform, the processing advances to step S203, and when it is determined that the waveform of the voltage Vin is not a direct current waveform, the processing returns to step S201.

In step S203, the control ECU 1 determines whether or not the waveform of the detected voltage Vin is the set ripple waveform. When it is determined that the waveform of the voltage Vin is the ripple waveform, the processing advances to step S204, and when it is determined that the waveform of the voltage Vin is not the ripple waveform, the processing returns to step S201. The processing returns to step S201 from step S203 when, for example, the control ECU 1 makes a detection error, a disturbance occurs in the waveform of the voltage Vin, and so on, and as long as the detection function is not fundamentally impaired, detection failures can be covered easily by repeated detection. Further, when the detection function is fundamentally impaired, separate measures can be taken on the basis of a sensor signal generated as a result of a vehicle abnormality or the like.

In step S204, since the voltage Vin has the set ripple waveform, the control ECU 1 determines that the main battery S 1 has been removed from the vehicle system 10. Following step S204, the processing for determining removal of the main battery S1 is terminated.

With the vehicle system 10 according to this embodiment, as described above, the control ECU 1 determines that the main battery S1 has been removed by detecting the ripple waveform of the sub-battery S2 that supplies power to the control ECU 1 only when the main battery S1 has been removed. Having determined that the main battery S 1 has been removed, the control ECU 1 can then appropriately control use of the sub-battery S2 as an alternate power supply by the load 4. Hence, a vehicle system with which removal of a main battery can be detected easily using existing device facilities can be provided. Accordingly, the control ECU 1, and therefore the vehicle system 10, can be prevented from performing inappropriate processing based on an erroneous determination in relation to internal variation in the vehicle system 10 caused by removal of the main battery S1, and moreover, a warning indicating that the main battery S1 has been removed can be issued via a display apparatus, an audio output apparatus, or the like.

Further, with the vehicle system 10 according to this embodiment, removal of the main battery S1 is detected even in a condition where the respective ECUs of the ECU group 3, which use only the main battery S1, cannot communicate with the control ECU 1 due to removal of the main battery S1, and therefore the control ECU 1 can be prevented from performing inappropriate processing based on an erroneous determination.

Furthermore, with the vehicle system 10 according to this embodiment, the mechanism with which the control ECU 1 controls the switch operation performed on the relay R1 in relation to the load 4 can be used not only when a failure occurs while the ignition is ON and the vehicle power supply is ON, but also when the main battery S 1 is removed while the vehicle power supply is OFF, for example during vehicle maintenance. As a result, the system configuration need not be increased in complexity.

Moreover, with the vehicle system 10 according to this embodiment, the load 4 that uses the sub-battery S2 can be drive-controlled by the control ECU 1 even when the main battery S 1 has been removed, and therefore a component that is to be operated when the vehicle power supply is OFF can be operated appropriately.

Note that since the output voltage V2 is set to be lower than the voltage value V11 of the output voltage V1, the output voltage waveform of the output voltage V2 corresponds to a ripple waveform in which a direct current component and a ripple are superimposed on the output voltage waveform of the output voltage V1, and this configuration is provided to ensure that the output voltage V2 of the sub-battery S2 is supplied to the control ECU 1 only when the main battery S1 has been removed. Therefore, even in a case where another configuration is employed to supply the output voltage V2 of the sub-battery S2 to the control ECU 1 only when the main battery S1 has been removed, as long as the output voltage waveform of the output voltage V2 corresponds to a ripple waveform in which at least a ripple is superimposed on the output voltage waveform of the output voltage V1, the voltage monitor 1c can detect removal of the main battery S1 by detecting the ripple waveform. In this case, even when the amplitude ΔV of the ripple is not constant, for example, the ripple waveform can be detected from a variation period of the amplitude.

Further, the power conversion apparatus provided in the sub-battery S2 is a step-up converter, but a step-down converter may be used instead. Furthermore, a single ECU may be provided in the ECU group 3 instead of a plurality of ECUs.

Embodiments were described above, but the above embodiments may be implemented with modified configurations within a scope that does not depart from the spirit of the invention.

The invention may be applied to various types of vehicles such as gasoline vehicles, hybrid vehicles, and electric automobiles.

## Claims

1. A vehicle system (10) comprising:
a plurality of power supplies (S1, S2);
a plurality of first loads (3) that use only a first power supply (S1) from among the plurality of power supplies (S1, S2);
a second load (4) that uses the first power supply (S1), from among the plurality of power supplies (S1, S2), as a normal power supply, and uses a second power supply (S2) as an alternate power supply to the first power supply (S1); and
a monitoring apparatus (1) that monitors respective conditions of the first loads (3) by communicating with the first loads (3), and determines that the first power supply (S1) has been removed after detecting that communication with all of the plurality of first loads (3) has been interrupted.

2. The vehicle system (10) according to claim 1, wherein
the monitoring apparatus (1) uses at least the first power supply (S1), from among the first power supply (S1) and the second power supply (S2), as a normal power supply, and uses the second power supply (S2) as a backup power supply to the first power supply (S1).

3. The vehicle system (10) according to claim 1 or 2, further comprising:
a switch apparatus (R1) that switches a power supply to the second load (4) between a power supply from the first power supply (S1) and a power supply from the second power supply (S2); and
a switch control apparatus that controls a switch operation of the switch apparatus (R1).

4. The vehicle system (10) according to any one of claims 1 to 3, further comprising a drive control apparatus that controls driving of the second load (4).

5. A vehicle system (10) comprising:
a plurality of power supplies (S1, S2) including two power supplies (S1, S2), an output voltage waveform of a second power supply (S2) of the two power supplies (S1, S2) having a ripple waveform obtained by superimposing at least a ripple component onto an output voltage waveform of a first power supply (S1) of the two power supplies (S1, S2);
a load (4) that uses the first power supply (S1) as a normal power supply and uses the second power supply (S2) as an alternate power supply to the first power supply (S1); and
a detection apparatus that uses the first power supply (S1) as a normal power supply, uses the second power supply (S2) as a backup power supply to the first power supply (S1), detects a supplied power supply voltage, and determines that the first power supply (S1) has been removed after detecting a power supply voltage having the ripple waveform.

6. The vehicle system (10) according to claim 5, further comprising:
another load (3) that uses only the first power supply (S1), from among the plurality of power supplies (S1, S2); and
a monitoring apparatus (1) that monitors a condition of the other load (3) by communicating with the other load (3).

7. The vehicle system (10) according to claim 5 or 6, further comprising:
a switch apparatus (R1) that switches a power supply to the load (4) between a power supply from the first power supply (S1) and a power supply from the second power supply (S2); and
a switch control apparatus that controls a switch operation of the switch apparatus.

8. The vehicle system (10) according to any one of claims 5 to 7, further comprising a drive control apparatus that controls driving of the load (4).
